# EUROPÄISCHE PATENTANMELDUNG

(11) **EP 4 446 295 A1**
(43) Veröffentlichungstag der Anmeldung: **16.10.2024**
(21) Anmeldenummer: 24158366.5
(22) Anmeldetag: 19.02.2024
(51) Int. Cl.: C04B 28/06, C04B 111/28

(54) **PORÖSE MINERALISCHE BAUSTOFFMASSE UND IHRE VERWENDUNG**

(30) Priorität: 14.04.2023 DE 102023109513
(71) Anmelder: CCM Concepts GmbH, 08523 Plauen (DE)
(72) Erfinder: Röder, Chris, 08523 Plauen (DE); Glauner, Marie, 53395 Reinbach (DE)
(74) Vertreter: Helge, Reiner

(57) **Zusammenfassung**

Die Erfindung betrifft eine poröse mineralische Baustoffmasse in Form eines Schaumbetons, dessen Zusammensetzung zumindest Wasser, Zement und Schaumbildner umfasst, wobei die Zusammensetzung aus einen Zementleimgemisch als Trockenmasse, umfassend Portlandzement, Calzium-Sulfo-Aluminat und Calciumaluminat, Zusatzstoffen zur Beschleunigung der Aushärtung und / oder zur Einstellung des Erstarrungszeitpunktes und/oder zur Hydrophobierung und gegebenenfalls aus Füllstoffen besteht, das mit einen Schaumbildner, umfassend ein Gemisch aus einem Rhamnolipid-Alginatpolymer-Komplex, Sodium Lauryl Sulfoacetat, Decyl Glycosid, Polyoxyethylen(20)-sorbitan-monolaurat, Alkylpolyglycoside, Tetranatrium-N,N-bis (carboxylato-methyl)-L-glutamat und Wasser, vermischt ist.

## Beschreibung

Die Erfindung betrifft eine Zusammensetzung von porösen mineralischen Baustoffmassen in Form eines Schaumbetons, wobei unter dem Begriff "Schaumbeton" ein hydrothermal gehärtetes, poröses mineralisches Material verstanden wird, dessen Zusammensetzung zumindest Wasser, Zement und Schaumbildner enthält, sowie seine Verwendung.

Als Baustoffe oder Baustoffmassen sind poröse mineralische Materialien in unterschiedlichster Art bekannt. Aufgrund ihrer hohen Porosität besitzen sie im Vergleich zu Beton eine deutlich geringere Rohdichte. Unter der Rohdichte versteht man die Dichte eines porösen Körpers basierend auf dem Volumen einschließlich der Porenräume.

Während die Rohdichte bei Normalbeton zwischen etwa 2.000 und 2.600 kg/m³ liegt, werden mit porösen mineralischen Baustoffen üblicherweise Rohdichten im Bereich von 80 bis 600 kg/m³ erreicht. Durch den hohen Luftanteil ergeben sich verbesserte Wärmedämmeigenschaften. Ausschlaggebend ist die Wärmeleitfähigkeit, die mit dem Wärmeleitwert Lambda angegeben wird. Je kleiner der Wert, desto besser ist das Dämmvermögen.

Abhängig von der Art der Herstellung unterteilt man poröse mineralische Materialien in Porenbeton und Schaumbeton. Porenbeton wird üblicherweise durch Vermischen der Ausgangsstoffe Brandkalk, Zement, Quarzsand und Wasser mit einem Porenbildner wie Aluminiumpulver oder Aluminiumpaste hergestellt. Das metallische Aluminium entwickelt in der alkalischen Suspension Wasserstoffgas, so dass viele kleine Gasblasen entstehen, welche die allmählich ansteifende Mischung aufschäumen. Nach einem Dampfhärteprozess in einem Autoklaven besteht das fertige Produkt aus einer kristallinen Phase von Calziumsilikathydrat, welche größtenteils dem natürlichen Mineral Tobermorit entspricht. Bei der Herstellung von Schaumbeton werden anstelle von Aluminium Schaumbildner beispielsweise auf Basis von Tensiden oder Proteinen eingesetzt. Üblicherweise wird ein vorerzeugter Schaum in Beton eingemischt und das Rohprodukt anschließend dampfgehärtet. Alternativ ist auch ein direktes Aufschäumen durch Einblasen von Luft in das mit einem Schaumbildner versehene Baustoffgemisch möglich.

Die EP 3 599 228 B1 beschreibt ein Verfahren zur Herstellung eines porösen mineralischen Baumaterials auf Calziumsilikathydrat-Basis, wobei das wässrige Gemisch in bezogen auf den Gesamtfeststoffgehalt 25-35 Gew.-% SiO₂, 18-35 Gew.-% Kalkhydrat, 25-45 Gew.-% Zement, 1-5 Gew.-% Kaliumsilikat, ggf. 5-10 Gew.-%, vorzugsweise 6-8 Gew.-% Kaolin und 3-8 Gew.-% eines Erhärtungsbeschleunigers umfasst, und das wässrige Gemisch mit einem Schaumbildner der ein Tensid oder Protein umfasst, vermischt wird.

Die DE 10 2010 062 762 B4 beschreibt ein Verfahren zur Herstellung von Schaumbeton mit den Schritten a) Bildung eines Zementleims bestehend aus Zement, Wasser, einem Netzwerkmittel, wobei es sich um ein Gemisch von negativ geladenen, anorganischen Stoffen und organischen Stoffen mit Amidgruppen mit entsprechenden Kationen handelt, die zwei oder dreiwertige Kationen oder eine Mischung derselben und/oder eine organische Verbindung mit überschüssigen positiven Ladungen aus der Klasse der kationischen Tenside und/oder der quartären Ammoniumverbindungen umfassen, und gegebenenfalls mindestens einem Zusatzstoff, durch Mischen der Komponenten in einem Mischer; b) Bildung eines Schaums bestehend aus Wasser, Luft und einem proteinbasierten Schaummittel aus unpolaren und polaren Aminosäuren mittels eines Schaumgenerators, wobei das Schaummittel ein Protein, welches zu 50 bis 80 Masse-% aus den Aminosäuren A (Alanin), E (Glutaminsäure), G (Glycin), I (Isoleucin), L (Leucin), M (Methionin), P (Prolin), Q (Glutamin) und V (Valin) besteht, mit einer Molmasse zwischen 20000 und 120000 Dalton und die restlichen 20 bis 50 Masse-% andere Aminosäuren sind, ist; c) Mischen des in Schritt a) gebildeten Zementleims und des in Schritt b) gebildeten Schaums im Mischer und/oder in einem Fahrmischer; und d) Trocknen des Schaumbetons.

Gegenstand der WO 2021/180309 A1 sind Verfahren zur Herstellung von Schaumbeton, in denen Luftporen mittels einem oder mehreren Luftporenbildnern und/oder durch Eintragen von Luft in wässrige Betonzusammensetzungen eingebracht werden, wobei die wässrigen Betonzusammensetzungen auf einem oder mehreren Schaumstabilisatoren, einem oder mehreren Schutzkolloid stabilisierten Polymeren von ethylenisch ungesättigten Monomeren in Form von wässrigen Dispersionen oder in Wasser redispergierbaren Pulvern, 30 bis 95 Gew.-% Zement, bezogen auf das Trockengewicht der Komponenten zur Herstellung der Betonzusammensetzungen, gegebenenfalls einem oder mehreren Füllstoffen und gegebenenfalls einem oder mehreren Additiven basieren.

Die DE 10 2009 052 435 A1 betrifft eine Mischung für Schaumbeton, insbesondere eine Rohstoffmischung für Autoklavschaumbeton, umfassend Zement, Sand, proteinhaltiges schaumerzeugendes Mittel und Wasser. Als Zusatzstoffe kommen Natriumfluorid sowie mehlfeine Asche- und Schlackenrückstände aus der Feststoffverbrennung zum Einsatz. Diese Rohstoffmischung Addiment Sb-31 enthält als proteinhaltiges schaumerzeugendes Mittel den Zusatzstoff NaF sowie mehlfeine Asche- und Schlackenrückstande aus der Festbrennstoffverbrennung mit spezifischer Oberfläche Sₛₚ von mindestens 300 m²/kg.

Die DE 10 2012 205 372 A1 beschreibt ein Verfahren und dessen Zusammensetzung, bei dem getrennt voneinander zwei separate Bindemittelleime, umfassend Zement, Wasser und mindestens einem Schaumgeber, hergestellt werden, die jeweils für sich zu zwei getrennten und unterschiedlich zusammengesetzten Zementschäumen verschäumt oder vermischt werden und anschließend zu einem Schaum zusammengeführt und homogenisiert werden. Als Bestandteile werden unter anderem als Schaumbildner ein Proteinhydrolysat und Portlandzement, Calciumaluminat oder Calciumaluminat mit einer Sulfatkomponente verwendet.

Die DE 10 2019 113 570 A1 beschreibt ein Verfahren zur Herstellung eines Schaumbetons und eines Bauelements durch Zusammenbringen einer ersten Mischung, enthaltend eine erste Zementart - Normalzement -, und einer zweiten Mischung, enthaltend eine zweite Zementart - Schnellzement -. Als Schnellzement wird vorzugsweise ein CSA-Zement verwendet.

Die DE 10 2012 205 372 A1 betrifft die Verwendung von Hydrolysaten glutaminreicher Proteine zur Verwendung als Luftporenbildner in Baustoffmassen, insbesondere als Additive für Baustoffmischungen, welche den Luftanteil dieser Baustoffmischungen beeinflussen. Die Zusammensetzungen kann neben glutaminreichen Peptiden oder Peptidmischungen einen oder mehrere Zusatzstoffe ausgewählt aus Fließmitteln, Bindemitteln, Verzögerern, Erstarrungsbeschleunigern, Antischrumpfadditive, Lösungsmitteln, Konservierungsmitteln, Pigmenten, Frostschutzmitteln, Polymeren, Additiven zur inneren Nachbehandlung, Verdickungsmitteln, Hydrophobierungsmitteln und/oder Fließmitteln aufweisen. Bevorzugte Bindemittel sind ausgewählt aus Zement und Calciumsulfat (oder dessen Kristallwasser aufweisende Modifikationen) aufweisenden Bindemitteln, wie z. B. Gips. Bevorzugte Bindemittel sind Zement oder Gips, besonders bevorzugt Zement. Als Zement kann jeder bekannte Zement verwendet werden. Vorzugsweise wird ein Zement eingesetzt, der zumindest ein Calciumsilicat, -aluminat und/oder -ferrit enthält. Bevorzugt werden Portlandzement (CEM I), Portlandkompositzement (CEM II), Hochofenzement (CEM III), Puzzolanzement (CEM IV) und Kompositzement (CEM V) oder Tonerdeschmelzzement eingesetzt.

Die DE 10 2017 129 140 A1 betrifft ein Verfahren zur Herstellung eines Bauelementes aus Schaumbeton und ein Bauelement, insbesondere eines Dämmelementes. Hierbei wird als erstes ein Zementleim, umfassend Wasser, ein Spezialzement und mindestens ein Zuschlagstoff aus der Gruppe Metakaolin, Microsilika, Nanosilika, Hydroxylapatit, Trycalciumphosphat und/oder pyrogene Kieselsäure, in einem hochdrehenden Kolloidmischer erzeugt, zweitens ein Schaum aus einem Schaumbildner und Luft erzeugt und drittens der Zementleim und der Schaum in einer Mischstation durch Vermischen miteinander zu einem Schaumbeton zusammengebracht.

Die DE 10 2015 013 396 A1 beschreibt ein Verfahren zur Herstellung eines schnellerstarrenden mineralischen Schaumes und dessen Zusammensetzung, bei dem getrennt voneinander zwei separate Bindemittelleime, umfassend Zement, Wasser und mindestens einem Schaumgeber, hergestellt werden, die jeweils für sich zu zwei getrennten und unterschiedlich zusammengesetzten Zementschäumen verschäumt werden und anschließend zu einem Schaum zusammengeführt und homogenisiert werden. Als Bestandteile werden unter anderem als Schaumbildner ein Proteinhydrolysat und Portlandzement, Calciumaluminat oder Calciumaluminat mit einer Sulfatkomponente verwendet.

In DE 10 2010 062 762 A1 wird ein Verfahren zur Herstellung eines Schaumbetons mit einer Trockendichte von weniger als 400 kg/m³ beschrieben, wobei ein Zementleim und ein Proteinschaum separat hergestellt und anschließend miteinander vermischt werden. Der Proteinschaumbildner besteht aus unpolaren und polaren Aminosäuren.

In DE 197 08 779 A1 wird ein bindemittelgebundener Schaum und dessen Herstellung beschrieben, der einen industriellen Anfallstoff als wesentlichen Bestandteil enthält. Bei dem Anfallstoff handelt es sich um einen Ziegelmehlstaub, der aus der Planziegelherstellung und/oder beim Ziegelrecycling anfällt. Die Herstellung des Ziegelleichtschaumes erfolgt in 2 Verfahrensschritten. Zuerst werden das Ziegelmehl, die Bindemittel, die Schaummittel, die Zusatzmittel und gegebenenfalls ein Erstarrungsbeschleuniger mit Wasser zu einer Suspension vermischt. Anschließend wird diese Suspension mit Druckluft aufgeschäumt.

Die WO 2018/ 060 517 A1 beschreibt eine Mischung enthaltend Rhamnolipide, Alginate und Pyoverdin sowie supramolekulare Rhamnolipid/Alginat/Pyoverdin-Komplexe, sowie die Verwendung der erfindungsgemäßen Mischung. Neben den unterschiedlichsten Anwendungen wird auch die Verwendung der Mischung oder des supramolekularen Rhamnolipid/Alginat/Pyoverdin-Komplexes für einen Schaumbeton beschrieben.

Der Erfindung liegt die Aufgabe zugrunde, eine verbesserte poröse mineralische Baustoffmasse in Form eines Schaumbetons bereitzustellen, dessen Zusammensetzung zumindest Wasser, Zement und Schaumbildner enthält und welches sich sowohl durch einen geringen Wärmeleitwert und als auch eine hohe mechanische Festigkeit auszeichnet. Bei der porösen mineralischen Baustoffmasse handelt es sich im Sinne der vorliegenden Anmeldung um ein Material auf Calziumsilikathydrat-Basis. Genauer gesagt beschäftigt sich die Erfindung mit einem verbesserten Schaumbeton, wobei unter dem Begriff "Schaumbeton" ein hydrothermal gehärtetes, poröses mineralisches Material verstanden wird, zu dessen Herstellung zumindest Wasser, Zement und Schaumbildner, vorzugsweise auf Tensid- oder Proteinbasis eingesetzt werden.

Erfindungsgemäß wird die Aufgabe gelöst durch eine poröse mineralische Baustoffmasse in Form eines Schaumbetons mit der Zusammensetzung aus einem Zementleimgemisch als Trockenmasse, umfassend Portlandzement, Calcium-Sulfo-Aluminat (CSA-Zement) und Calciumaluminat (SCA-Zement), Zusatzstoffen zur Beschleunigung der Aushärtung und / oder zur Einstellung des Erstarrungszeitpunktes und/oder zur Hydrophobierung und gegebenenfalls aus Füllstoffen besteht, und einem Schaumbildner, umfassend ein Gemisch aus einem Rhamnolipid-Alginatpolymer-Komplex, Sodium Lauryl Sulfoacetat, Decyl Glycosid, Polyoxyethylen(20)-sorbitan-monolaurat, Alkylpolyglycoside, Tetranatrium-N,N-bis (carboxylato-methyl)-L-glutamat und Wasser.

Das Zementleimgemisch enthält Portlandzement, Calcium-Sulfo-Aluminat (CSA-Zement) und Calciumaluminat (SCA-Zement) in einem Verhältnis von 1 zu 0,4 zu 0,1 bis 1 zu 1 zu 0,8 bezogen auf die Trockenmasse.

Dem Zementleimgemisch können als zusätzliche Füllstoffe bis zu 1 Gew.% 2,3 Dihydroxybernsteinsäure, bis zu 1 Gew.% Natriummonofluorphosphat und bis zu 15 Gew.% Silikastaub bezogen auf die Trockenmasse einzeln oder gemeinsam zugesetzt sein. Die zusätzlichen Füllstoffe beeinflussen als Verzögerer oder als Beschleuniger das Abbindeverhalten. Bei der Verwendung von Silikastaub können Druckfestigkeiten über 100 N/mm² und eine Verbesserung der Dichtigkeit erzielt werden.

In das als Trockenmasse vorliegende Zementleimgemisch wird ein Schaum eingerührt, wobei der Schaum aus einem Schaumbildner und Wasser im Verhältnis von 1 zu 10 bis 1 zu 50, vorzugsweise 1 zu 15, gebildet wird und eine Schaumrohdichte von 30 bis 100 g/l, vorzugsweise 60 g/l aufweist.

Dem Zementleimgemisch als Trockenmasse werden als Zusatzstoff zur Einstellung des Erstarrungszeitpunktes 0,01 bis 1,0 Gew.% eines Polyacrylderivates und bis zu 0,1 Gew.% Lithiumcarbonat zugesetzt. Weiterhin kann dem Zementleimgemisch als Trockenmasse als Zusatzstoff zur Beschleunigung der Aushärtung 0,1 bis 40 Gew.% Calciumsulfat und 0,1 bis 1,0 Gew.% Aluminiumhydroxid zugegeben werden.

Als weiterer Zusatzstoff kann dem Zementleimgemisch als Trockenmasse zur Hydrophobierung 0,5 bis 3,0 Gew.% Aluminiumstearat bezogen auf die Trockenmasse zugegeben werden. Durch die Hydrophobierung verbessert sich die Standfestigkeit des Schaums.

Die Baustoffmasse enthält 50 bis 85 Gew.%, vorzugsweise 65 Gew.%, Trockenmasse aus dem Zementleimgemisch, den Zusatzstoffen und gegebenenfalls den Füllstoffen, wobei dem Gemisch gegebenenfalls bei Bedarf Wasser zugesetzt werden kann, und 30 bis 40 Gew.%, vorzugsweise 35 Gew.%, des aus Schaumbildner und Wasser aufgeschäumten flüssigen Schaummittels.

Als Schaumbildner kommt ein Gemisch aus einem Rhamnolipid-Alginatpolymer-Komplex, Sodium Lauryl Sulfoacetat (anionischer Schaumbildner), Decyl Glycosid (nichtionischer Schaumbildner), Polyoxyethylen(20)-sorbitan-monolaurat (nichtionischer Schaumbildner), Alkylpolyglycoside (nichtionische Tenside), Tetranatrium-N,N-bis(carboxylatomethyl)-L-glutamat (Komplexbildner) und Wasser, vozugsweise demineralisiertes Wasser zum Einsatz.

Die poröse mineralische Baustoffmasse weist eine Trockenrohdichte von 80 bis 150 kg/m³, vorzugsweise von 125 kg/m³, und eine Druckfestigkeit nach Aushärtung von 80 bis 140 kPa, vorzugsweise von 115 kPa, auf. Die Wärmeleitfähigkeit liegt im Bereich von 0,03 bis 0,05 W/mk, vorzugsweise von 0,038 W/mk.

Die Baustoffmasse enthält eine Zusammensetzung bezogen auf die Trockenmasse von 20 bis 70 Gew.% Portlandzement vorzugsweise von 25 bis 35 Gew.%, von 20 bis 70 Gew.% CSA-Zement, vorzugsweise von 25 bis 35 Gew.%, 3 bis 30 Gew.% SCA-Zement, vorzugsweise von 0,1 bis 40 Gew.% Anhydrid, vorzugsweise von 18 bis 22 Gew.%, 0,1 bis 1,0 Gew.% Aluminiumhydroxid, vorzugsweise von 0,15 bis 0,35 Gew.%, 0,5 bis 3,0 Gew.% Aluminiumstearat, vorzugsweise von 0,5 bis 1,0 Gew.%, 0,01 bis 1,0 Gew.% Polyacrylsäurederivat, vorzugsweise von 0,05 bis 0,5 Gew.% sowie bis zu 15 Gew.% Tonerde und bis zu 0,1 Gew.% Lithiumcarbonat.

Die Baustoffmasse enthält eine Zusammensetzung bezogen auf die Trockenmasse von 20 bis 70 Gew.% Portlandzement, 20 bis 70 Gew.% CSA-Zement, 18 bis 22 Gew.% SCA-Zement, 0,1 bis 40 Gew.% Anhydrid, 0,1 bis 1,0 Gew.% Aluminiumhydroxid, 0,5 bis 3,0 Gew.% Aluminiumstearat, 0,01 bis 1,0 Gew.% Polyacrylsäurederivat sowie bis zu 15 Gew.% Tonerde und/oder bis zu 0,1 Gew.% Lithiumcarbonat und/oder bis zu 5 Gew.% Calciumsilikat und/oder bis zu 1 Gew.% 2,3 Dihydroxybernsteinsäure und/oder bis zu 1 Gew.% Natriummonofluorphosphat und/oder bis zu 15 Gew.% Silikastaub.

Die erfindungsgemäße poröse mineralische Baustoffmasse eignet sich als Ortschaumbeton zur Verfüllung von Hohlräumen, zur Herstellung von Wand-, Boden- oder Deckenelementen in Platten- oder Blockform oder zur Herstellung von Dämmplatten für Wärmedämmverbundsysteme.

Anhand eines Ausführungsbeispiels soll die Erfindung näher beschrieben werden.

Die erfindungsgemäße poröse mineralische Baustoffmasse umfasst einen Zementleim zur Herstellung von Schaumbeton, wobei dieser Zementleim mindestens die folgenden Bestandteile Wasser, Zementmischung, welche eine erste Zementart, insbesondere einen Normalzement (Portlandzement), eine zweite Zementart, insbesondere einen CSA-Zement und eine dritte Zementart, insbesondere einen SCA-Zement, aufweist. Dem Zementleim können Zusatzstoffe zur Beschleunigung der Aushärtung, insbesondere Calciumsulfat (Anhydrid) und/oder Aluminiumhydroxid zugegeben werden. Des Weiteren können Zusatzstoffe wie Polyacrylsäurederivate als Verflüssiger und/oder Lithiumcarbonat als Reaktionsbeschleuniger zur Einstellung des Erstarrungszeitpunktes und Aluminiumstearat zur Hydrophobierung und Füllstoffe wie Tonerde und/oder Calciumsilikat zugegeben werden.

Je nach Anwendungsfall werden bestimmte Zuschlagsstoffe und Füllstoffe eingesetzt. Die Zuschlagsstoffe machen insgesamt im Zementleim und/oder im fertigen Schaumbeton einen Gewichtsanteil zwischen 0,01 Gew.% und 22 Gew. % aus, während die Füllstoffe einen Gewichtsanteil von typischer Weise von 0,01 Gew.% und 20 Gew.% ausmachen.

In einer bevorzugten Ausführungsform wird die erfindungsgemäße mineralische Baustoffmasse weiterhin anhand des nachfolgenden Ausführungsbeispiels weiter erläutert. Es wird ein Zementleim, welcher je nach Maschinentechnik und Umgebungsbedingungen aus den folgenden Bestandteilen 18,7 kg Portlandzement, 18,7 kg Calcium-Sulfo-Aluminatzement (CSA-Zement) und 11,9 kg amorphes Calciumaluminat (SCA-Zement) besteht, dem 11,9 kg. Anhydrid (Tonerde), 0,15 kg Polyacrylsäurederivat, 0,5 kg Aluminiumstearat, 0,18 kg Aluminiumhydroxid und 0,02 kg Lithiumcarbonat zugemischt werden. Die Gesamttrockenmasse des Zementleims beträgt ca. 62,1 kg, der insbesondere Rhamnolipide im weiteren Verlauf als Schäumungsmittel zugesetzt werden. Auf diese Weise können sehr stabile Schaumbetonmischungen erzielt werden, bei erfreulich geringen Wärmeleitfähigkeiten. Es können auf diese Weise Wärmeleitfähigkeiten der Bauelemente von zwischen 0,03 und 0,05 W/mK, vorzugsweise von zwischen 0,03 und 0,04 W/mK erreicht werden.

Als Schaumbildner wird ein Rhamnolipid-Alginatpolymer-Komplex, welcher unter Verwendung von Mikroorganismen des Genus Pseudomonas hergestellt wird, eingesetzt. Die durch Züchten von Bakterien des Genus Pseudomonas gewonnene Rhamnolipid-Biotenside haben hervorragende Tensid-Eigenschaften und lassen sich besonders bei der Herstellung von Baustoffen, insbesondere von Schaumbeton, nutzen. Der Rhamnolipid-Alginatpolymer-Komplex besteht aus Alginat, Mono- und Di-Rhamnolipiden.

Der Schaumbildner umfasst eine Mischung aus 1,0 Gew.% sekundären Natriumalkylsulfonaten, 1,0 Gew.% Sodium Lauryl Sulfoacetat, 2,0 Gew.% Rhamnolipid-Alginatpolymer-Komplex, 1,5 Gew.% Decyl Glycosid, 0,5 Gew.% Polyoxyethylen(20)-sorbitan-monolaurat, 3,0 Gew% Alkylpolyglycoside, 0,5 Gew.% Tetranatrium-N,N-bis(carboxylatomethyl)-L-glutamat und als Rest demineralisiertes Wasser.

Für den Einsatz zur Herstellung von Schaumbeton wird vorzugsweise ein überwässertes Schaummittel, auch als Schaumwasser bezeichnet, eingesetzt. Die Anmischung von Schaumbildner und Wasser erfolgt im Verhältnis 1 zu 15 über lokale kontinuierliche oder chargierte Mischtechnik. In einem Schaumgenerator wird aus Wasser, Schaumbildner und Luft ein Schaum über ein Schaumrohr erzeugt, wobei der Schaum eine Schaumrohdichte von 75 g/l aufweist.

Der Gesamttrockenmasse von ca. 62,1 Kg wird ca. 37,9 Kg Schaumwasser untergemischt, was eine Rohmischung eines Schaumbetons ergibt. Nach diesem Ausführungsbeispiel entstehen etwa 100 Kg Frischschaumbeton bei einer Rohdichte von 125 Kg/m³.

Die erhaltene Rohmischung wird in eine Form eingebracht, wodurch ein Block mit einem Volumen von ca. 0,8 m³ entsteht und zu einem Bauelement weiterverarbeitet werden. Bei der Weiterverarbeitung kann es sich insbesondere um eine Formgebung durch Sägen oder Schneiden in Platten- oder Blockform und/oder einen Trocknungsprozess handeln.

Alternativ dazu, dass das Bauelement als Dämmplatte ausgebildet sein soll, kann der dann gegebenenfalls noch flüssige oder breiige Schaumbeton in eine flache Form gegeben werden, um zu trocknen und auszuhärten. Bei der Form kann es sich beispielsweise um eine Verschalung handeln. Aus einer Verschalung können auf diese Weise auch mehrere Dämmplatten herausgearbeitet werden. Auch andere Formen für andere Bauelemente sind selbstverständlich ohne weiteres realisierbar.

Durch die erfindungsgemäße Zusammensetzung der porösen mineralischen Baustoffmasse als Schaumbeton ist es überraschenderweise möglich, zum einen die Wärmeleitfähigkeit signifikant herabzusetzen und einen Wärmeleitwert von weniger als 0,05 W/mK zu erreichen. Zum anderen gelingt es, eine hohe mechanische Festigkeit des Materials zu gewährleisten. Die erfindungsgemäß hergestellte, poröse mineralische Baustoffmasse zeichnet sich bevorzugt durch eine im Vergleich zu auf andere Weise aus den gleichen Bestandteilen erhaltenem hydrothermal gehärtetem Schaumbeton deutlich verbesserte Druckfestigkeit und Biegezugfestigkeit aus. Die Druckfestigtkeit liegt bei 115 kPa und die Wärmeleitfähigkeit bei 0,039 W/mK. Die erfindungsgemäße Zusammensetzung der porösen mineralischen Baustoffmasse eignet sich daher insbesondere als Dämmmaterial zur Wärmedämmung sowie als Brandschutzmaterial.

Dieser innovative Schaumbeton eröffnet aufgrund seiner wesentlichen Vorteile gegenüber anderen Wärmedämmstoffen (kostengünstig, nicht brennbar, umweltfreundlich, etc.) eine Vielzahl von neuen Anwendungsgebieten. Sowohl in Neubauten als auch in der energetischen Bestandsanierung bieten sich umfangreiche Anwendungspotenziale für die nachhaltige Wärmedämmung.

Ein typischer Einsatz ist in der Außenwand- oder Dachkonstruktion. Insbesondere kann der Schaumbeton aber auch an der Innenwand eingesetzt werden. Vorzugsweise wird er dazu geformt und beispielsweise in Form von Platten oder Blöcken gesägt und/oder geschnitten. Hierbei kann er dann besonders vorteilhafterweise als Dämmplatte eingesetzt werden, insbesondere mit besonders niedrigen Wärmeleitfähigkeitseigenschaften.

## Patentansprüche

1. Poröse mineralische Baustoffmasse in Form eines Schaumbetons, dessen Zusammensetzung zumindest Wasser, Zement und Schaumbildner umfasst, **dadurch gekennzeichnet, dass** die Zusammensetzung aus einen Zementleimgemisch als Trockenmasse, umfassend Portlandzement, Calzium-Sulfo-Aluminat und Calciumaluminat, Zusatzstoffen zur Beschleunigung der Aushärtung und / oder zur Einstellung des Erstarrungszeitpunktes und/oder zur Hydrophobierung und gegebenenfalls aus Füllstoffen besteht, das mit einen Schaumbildner, umfassend ein Gemisch aus einem Rhamnolipid-Alginatpolymer-Komplex, Sodium Lauryl Sulfoacetat, Decyl Glycosid, Polyoxyethylen(20)-sorbitan-monolaurat, Alkylpolyglycoside, Tetranatrium-N,N-bis (carboxylato-methyl)-L-glutamat und Wasser, vermischt ist.

2. Poröse mineralische Baustoffmasse nach Anspruch 1, **dadurch gekennzeichnet, dass** das Zementleimgemisch als Bestandteile Portlandzement, Calcium-Sulfo-Aluminat und Calciumaluminat in einem Verhältnis von 1 zu 0,4 zu 0,1 bis 1 zu 1 zu 0,8 bezogen auf die Trockenmasse enthält.

3. Poröse mineralische Baustoffmasse nach Anspruch 1 und 2, **dadurch gekennzeichnet, dass** dem Zementleimgemisch als zusätzliche Füllstoffe bis zu 1 Gew.% 2,3 Dihydroxybernsteinsäure, bis zu 1 Gew.% Natriummonofluorphosphat und bis zu 15 Gew.% Silikastaub bezogen auf die Trockenmasse einzeln oder gemeinsam zugesetzt sind.

4. Poröse mineralische Baustoffmasse nach Anspruch 1, **dadurch gekennzeichnet, dass** der Schaumbildner mit Wasser im Verhältnis von 1 zu 10 bis 1 zu 50 zu einem flüssigen Schaummittel mit einer Schaumrohdichte von 50 bis 100 g/l aufgeschäumt ist.

5. Poröse mineralische Baustoffmasse nach Anspruch 1, **dadurch gekennzeichnet, dass** als Zusatzstoff zur Beschleunigung der Aushärtung 0,1 bis 40 Gew.% Calciumsulfat und 0,1 bis 1,0 Gew.% Aluminiumhydroxid bezogen auf die Trockenmasse zugegeben sind.

6. Poröse mineralische Baustoffmasse nach Anspruch 1, **dadurch gekennzeichnet, dass** als Zusatzstoff zur Einstellung des Erstarrungszeitpunktes 0,01 bis 1,0 Gew.% ein Polyacrylderivat und bis zu 0,1 Gew.% Lithiumcarbonat bezogen auf die Trockenmasse zugegeben sind.

7. Poröse mineralische Baustoffmasse nach Anspruch 1, **dadurch gekennzeichnet, dass** als Zusatzstoff zur Hydrophobierung 0,5 bis 3,0 Gew.% Aluminiumstearat bezogen auf die Trockenmasse zugegeben sind.

8. Poröse mineralische Baustoffmasse nach Anspruch 1, **dadurch gekennzeichnet, dass** als Füllstoff bis zu 15 Gew.% Tonerde und/oder bis zu 5 Gew.% Calciumsilikat bezogen auf die Trockenmasse zugegeben sind.

9. Poröse mineralische Baustoffmasse nach Anspruch 1, **dadurch gekennzeichnet, dass** die Baustoffmasse 50 bis 85 Gew.% Trockenmasse aus dem Zementleimgemisch, den Zusatzstoffen und gegebenenfalls den Füllstoffen und 15 bis 50 Gew.% des aus Schaumbildner und Wasser aufgeschäumten flüssigen Schaummittels enthält.

10. Poröse mineralische Baustoffmasse nach Anspruch 1, **dadurch gekennzeichnet, dass** die Baustoffmasse eine Trockenrohdichte von 80 bis 150 kg/m³ aufweist.

11. Poröse mineralische Baustoffmasse nach Anspruch 1, **dadurch gekennzeichnet, dass** die Baustoffmasse nach Aushärtung eine Druckfestigkeit von 80 bis 140 kPa aufweist.

12. Poröse mineralische Baustoffmasse nach Anspruch 1, **dadurch gekennzeichnet, dass** die Baustoffmasse nach Aushärtung eine Wärmeleitfähigkeit von 0,03 bis 0,05 W/mk aufweist.

13. Poröse mineralische Baustoffmasse nach Anspruch 1 und mindestens einem der Ansprüche 2 bis 11, **dadurch gekennzeichnet, dass** die Baustoffmasse eine Zusammensetzung bezogen auf die Trockenmasse von 20 bis 70 Gew.% Portlandzement, 20 bis 70 Gew.% CSA-Zement, 18 bis 22 Gew.% SCA-Zement, 0,1 bis 40 Gew.% Anhydrid, 0,1 bis 1,0 Gew.% Aluminiumhydroxid, 0,5 bis 3,0 Gew.% Aluminiumstearat, 0,01 bis 1,0 Gew.% Polyacrylsäurederivat sowie bis zu 15 Gew.% Tonerde und/oder bis zu 0,1 Gew.% Lithiumcarbonat und/oder bis zu 5 Gew.% Calciumsilikat enthält.

14. Poröse mineralische Baustoffmasse nach Anspruch 1 und mindestens einem der Ansprüche 2 bis 11, **dadurch gekennzeichnet, dass** die Baustoffmasse eine Zusammensetzung bezogen auf die Trockenmasse von 20 bis 70 Gew.% Portlandzement, 20 bis 70 Gew.% CSA-Zement, 18 bis 22 Gew.% SCA-Zement, 0,1 bis 40 Gew.% Anhydrid, 0,1 bis 1,0 Gew.% Aluminiumhydroxid, 0,5 bis 3,0 Gew.% Aluminiumstearat, 0,01 bis 1,0 Gew.% Polyacrylsäurederivat sowie bis zu 15 Gew.% Tonerde und/oder bis zu 0,1 Gew.% Lithiumcarbonat und/oder bis zu 5 Gew.% Calciumsilikat und/oder bis zu 1 Gew.% 2,3 Dihydroxybernsteinsäure und/oder bis zu 1 Gew.% Natriummonofluorphosphat und/oder bis zu 15 Gew.% Silikastaub enthält.

15. Verwendung der porösen mineralischen Baustoffmasse gemäß Anspruch 1 und mindestens einem der Ansprüche 2 bis 12 als Ortschaumbeton zur Verfüllung von Hohlräumen.

16. Verwendung der porösen mineralischen Baustoffmasse gemäß Anspruch 1 und mindestens einem der Ansprüche 2 bis 12 zur Herstellung von Wand-, Boden- oder Deckenelementen in Platten- oder Blockform.

17. Verwendung der porösen mineralischen Baustoffmasse gemäß Anspruch 1 und mindestens einem der Ansprüche 2 bis 12 zur Herstellung von Dämmplatten für Wärmedämmverbundsysteme.
